# EUROPEAN PATENT APPLICATION

(11) **EP 4 400 443 A2**
(43) Date of publication of application: **17.07.2024**
(21) Application number: 24178731.6
(22) Date of filing: 02.12.2022
(51) Int. Cl.: B65D 47/08

(54) **CLOSURE, CARTON PACKAGE, AND METHODS OF PRODUCING THE SAME**

(30) Priority: 10.12.2021 SE 2151515
(62) Divisional of application: 22210989.4
(71) Applicant: Modulpac AB, 341 50 Lagan (SE)
(72) Inventor: Svensson, Micael, 33135 VÄRNAMO (SE)
(74) Representative: Industripatent i Växjö AB

(57) **Abstract**

A closure (18) configured to be attached to a carton package (10) for a pourable product comprises an attachment collar (20) configured to be attached to an interior face (74a) of the carton package (10); a spout (22) extending along a spout axis (A); and a cap arrangement (24) comprising a reclosable flip cap (26) movable between a fully closed position and an open position; an attachment ring (28) permanently and rotatably attached to the spout (22); and a hinge (30) permanently holding the cap (26) to the attachment ring (28), wherein the flip cap (26) is configured to be moved from the fully closed position to the open position by pivoting the cap (26) about the hinge (30), wherein the cap arrangement (24) is rotatable about the spout axis (A) with the cap (26) in the fully closed position.

## Description

### Field of the invention

The present invention relates to a closure configured to be attached to a carton package, to a method of producing such a closure, to a carton package provided with such a closure, and to a method of producing such a carton package.

### Background

Carton packages are often used for packaging pourable products, such as cooled dairy products. Due to the high volumes in which such packages are often produced, it is desirable that the carton packages be produced at low cost and with low environmental impact. At the same time, the carton packages should preferably be easy to use. WO 2021/001433 A1 discloses a closure device configured to be attached to a carton package. There is however a need for a further improved carton package.

### Summary

It is an object of the present invention to solve, or at least mitigate, parts or all of the above mentioned problems. To this end, there is provided a closure configured to be attached to a carton package for a pourable product, the closure comprising an attachment collar extending along an attachment plane and having an attachment face configured to be attached to an interior face of the carton package; a spout extending from the attachment collar along a spout axis, the spout having a circular cross-section in a plane perpendicular to the spout axis; and a cap arrangement comprising a reclosable cap movable between a fully closed position, in which it closes a circular pouring outlet of the spout, and an open position, in which pourable product may be poured from the pouring outlet; an attachment ring permanently and rotatably attached to the spout; and a hinge permanently holding the cap to the attachment ring, wherein the cap is a flip cap configured to be moved from the fully closed position to the open position by pivoting the cap about the hinge, wherein the cap arrangement is rotatable about the spout axis with the cap in the fully closed position. This facilitates using a carton package production line adapted for screw caps also for tethered flip caps, which are inexpensive and easy to use, as well as generally prevent loss of the cap. A flip cap may also be configured to be held in an open position, for example by a bias in the hinge, which facilitates pouring. Closures with screw caps generally do not need to be positioned in a certain orientation about the spout axis prior to attachment to the carton package. Similarly, also with a closure having a flip cap as defined above, the closure need not be positioned in a certain orientation about the spout axis prior to attachment to the carton package. Instead, the end user of the carton package may, prior to opening the carton package, rotate the cap arrangement to a position in which the cap is easy to open, and/or in which the cap will not, once opened, be positioned in the flow path of the pourable product when pouring from the spout. The hinge may define a hinge axis transversal to the spout axis. According to embodiments, the hinge axis may be parallel to the attachment plane. Preferably, the fully closed position is a liquid-tight position, in which the cap seals against the spout in a liquid-tight manner, to prevent leakage of liquid content such as water, milk, juice or the like. Similarly, preferably, the cap is rotatable about the spout axis while remaining in the liquid-tight position, and/or without breaking any auxiliary liquid-tight barrier(s) and/or frangible bridge(s) associated with the closure. Preferably, the closure is configured to enable movement of the cap from the fully closed position to the open position without prior or subsequent turning about the spout axis; for example, the closure may be configured to enable movement of the cap from the fully closed position to the open position by solely pivoting the cap about the hinge. The cap may be free from any threads engaging with mating threads of the spout. Preferably, the cap is rotatable a full turn about the spout axis in the fully closed position; thereby, the flip cap can be moved to any orientation from any starting point prior to opening. The spout axis defines a cylindrical coordinate system, and thereby also defines a radial direction and a circumferential direction, which may be referred to hereinbelow.

According to embodiments, the cap arrangement may comprise a lift indication such as a lift tab, which may be shaped to facilitate gripping the cap with a finger to open the cap. The cap arrangement may thereby be turned about the spout axis to a position in which the lift indication is easy to reach for opening. This position may be different for different users, and each user may find what works the best for him/her.

According to embodiments, the hinge is configured as a living hinge. The living hinge may be shaped to tighten the engagement between the attachment ring and the spout when the cap is moved to the open position, for example by locally slightly deforming the attachment ring at the circumferential position of the living hinge. Thereby, the risk that the cap, during pouring, falls back towards the pouring outlet by the intrinsic weight of the cap, is reduced. Such a tightening shape of the living hinge may be obtained by e.g. configuring the living hinge as a butterfly hinge, and/or shaping the hinge to span an angular distance in the circumferential direction about the spout axis of more than 24°.

According to embodiments, the cap may be rotatable about the spout axis, when in the fully closed position, at a fixed axial position along the spout axis. The fixed axial position may be defined by e.g. mating snap ridges on the cap and the spout.

According to embodiments, the cap arrangement may be configured to provide, when the cap is in the fully closed position, a friction engagement with the spout producing a rotation resistance torque, against rotation about the spout axis, of between 0,5 Nm and 5 Nm. This range provides an attractive balance between fluid tightness and ease of turning the cap arrangement about the spout axis. The rotation resistance torque may be measured at room temperature, i.e. 20°C. More preferably, the torque may be between 1,5 Nm and 3,0 Nm.

According to embodiments, the cap and the spout may be made of polyethylene. This results in a low rotation friction in combination with a good liquid tightness at the interface between the cap and the spout. Moreover, friction of polyethylene may be further reduced at temperatures typical of refrigerators.

According to embodiments, the attachment collar may be circular and concentric with the spout axis. This reduces any dependency of the attachment process on the orientation of the closure.

According to embodiments, the attachment collar may be made of thermoplastic, and the attachment face of the attachment collar may be provided with a liquefaction initiation ridge extending about the spout axis. Such a closure is particularly well suited for friction welding, such as ultrasonic welding, to the interior face of the carton package. The liquefaction initiation ridge provides an initial localization of the pressure of the attachment face onto the interior face of the of the carton package during friction welding, and thereby defines a well-defined and localized liquefaction initiation interface of the thermoplastic. According to embodiments, the liquefaction initiation ridge may be circular. Thereby, no particular orientation of a welding tool about the spout axis is required. The liquefaction initiation ridge may be intermittent or continuous. The latter may be preferred in order to maximize liquid tightness of the ultrasonic weld joint. An exemplary suitable material for the entire closure is polyethylene.

According to embodiments, a total width of the cap arrangement in a direction perpendicular to the spout axis may be smaller than a loop width, such as a loop diameter, of the liquefaction initiation ridge in a direction perpendicular to the spout axis.

According to embodiments, the cap may be releasably attached to the spout attachment ring via a plurality of frangible bridges. The frangible bridges may be configured to break when opening the cap for the first time. Thereby, the frangible bridges may be used as tamper evidence. The cap, the attachment ring and the frangible bridges may be integrally formed, e.g. by injection moulding. According to embodiments, the attachment ring may be sufficiently loosely held to the spout to enable the attachment ring to follow a rotation of the cap about the spout axis without breaking the frangible bridges. Thereby, caps may be easily turned to a desired orientation about the spout axis in the fully closed position without breaking the tamper evidence.

According to embodiments, the cap may comprise an outer cap mantle at least partially circumferentially surrounding the radially outer perimeter of the pouring outlet of the spout. Preferably, the cap mantle extends, radially outside the spout, about the entire circumference of the spout. The cap mantle may be configured as a skirt extending axially from an axial end wall of the cap, towards the attachment collar.

According to embodiments, the cap mantle may have a radially outer face provided with friction ribs for turning the cap about the spout axis. Preferably, the friction ribs are parallel to the spout axis. Such an arrangement facilitates extraction from a moulding tool. Preferably, the friction ribs are distributed about the entire circumference of the cap mantle.

According to embodiments, the cap mantle may be substantially circular-cylindrical. According to further embodiments, the entire cap arrangement may be substantially circular-cylindrical.

According to embodiments, an outer face of the cap mantle may be provided with a lift tab extending radially away from the spout axis. This facilitates opening the cap. Preferably, the lift tab is positioned opposite to the hinge. Preferably, the lift tab is provided at a bottom edge of the cap mantle facing the attachment collar. According to embodiments, an upper edge of the attachment ring, facing away from the attachment collar, is provided with a cutaway in register with the lift tab.

According to embodiments, the lift tab extends radially less than 2 mm from a radially outer face of the cap mantle. This facilitates using the same production line for screw caps and tethered flip caps. According to further embodiments, the lift tab may extend radially less than 1,4 mm from the radially outer face of the cap mantle.

According to embodiments, the cap may comprise a circular bore seal extending into the spout and engaging with a radially inner face of the spout. According to further embodiments, the bore seal may have a thickness of between 0,4 mm and 0,8 mm. Such a bore seal thickness range improves liquid tightness.

According to embodiments, the bore seal may comprise a guide section configured to, when moving the cap from the open position to the fully closed position, guide the bore seal into the spout, wherein a radially outer face of the guide section tapers in a longitudinal direction along the spout axis towards the attachment plane. The guide section may be defined by a distal end section of the bore seal, i.e. the section of the bore seal which is the most remote from the bore seal's attachment to an axial end wall of the cap.

According to embodiments, the bore seal may comprise a bias section configured to resiliently bias the bore seal against the radially inner face of the spout, wherein a radially outer face of the bias section tapers in a longitudinal direction along the spout axis away from the attachment plane. The bias section may be defined by a proximal section of the bore seal, i.e. a section of the bore seal which is close to the bore seal's attachment to an axial end wall of the cap. When combined with a guide section as defined above, the bias section may be positioned between the guide section and the axial end wall of the cap.

According to embodiments, the bore seal may define, adjacent to the hinge, a cap support tongue configured to, when the cap is open, hold the cap at an opening angle of at least 60°. This reduces the risk that the cap might obstruct the flow of pourable product when poured from the pouring outlet. Preferably, the opening angle is at least 75°.

According to embodiments, a radially inner face of the cap mantle may be provided with a set of pouring outlet alignment tabs distributed circumferentially about the spout axis and protruding radially towards the spout axis, the pouring outlet alignment tabs being configured to engage with a radially outer face of the pouring outlet. Thereby, the pouring outlet may be squeezed between the bore seal and the pouring outlet alignment tabs, which provides for a good liquid tightness.

According to embodiments, the cap may seal, when in the fully closed position, against the spout along a sealing line extending in a closed line about the spout axis, wherein the sealing line is positioned at an axial distance from the attachment collar of at least 5 mm. This reduces the risk that the process of attaching the attachment collar to the packaging board of the carton package affect the tightness of the seal. Preferably, the sealing line is positioned at an axial distance from the attachment collar of less than 15 mm, and more preferably, of less than 12 mm. Preferably, the sealing line is liquid-tight, and the closure is free from any other liquid-tight seals between the interior and the exterior of the package. Thereby, cost and complexity of the closure may be kept low. If the closure is provided with tamper evidence such as frangible bridges, the sealing line may be in fluid communication with the interior of the package when the tamper evidence is unbroken, i.e. when the closure has never been opened.

According to embodiments, the spout may be defined by a circumferential wall having a radial thickness, adjacent to the pouring outlet, of between 0,5 mm and 0,85 mm. Such a spout wall thickness range enables the shape of the spout to adapt to the shape of the cap, which improves liquid tightness.

According to embodiments, the closure, excluding the attachment collar, may have a height/width ratio of between 0,28 and 0,40. Such a height/width ratio is well suited for untethered screw caps, and thereby facilitates use in a production line for untethered screw caps. Moreover, the height/width ratio provides a good balance between the ease of operating the cap and the transport and shop shelf volume required by the carton package. For example, when applied to the top of a carton package, the closure height may affect the stacking height of a stack of carton packages.

According to embodiments, the cap may have an outer diameter of between 30 mm and 35 mm.

According to embodiments, the attachment collar may be circular, and may have an outer diameter of between 38 mm and 42 mm. More preferably, the attachment collar may have an outer diameter of between 39 mm and 41 mm. Any circular liquefaction ridge, as the case may be, may have a diameter of between 36 mm and 39 mm.

According to embodiments, the hinge may comprise a bending indication having a thickness of between 0,25 mm and 0,45 mm.

According to embodiments, the closure may further comprise, within the spout, a tear ring for tearing an impervious membrane closing the spout. Alternatively, the closure may be free from any additional barriers closing the spout except for the cap.

According to a second aspect, parts or all of the above mentioned problems are solved, or at least mitigated, by a carton package comprising a closure as defined hereinabove. The carton package may be, for example, a cooled food product package, such as a cooled dairy product package. According to embodiments, the carton package encloses a volume of 2 litres or less, and according to further embodiments, the carton package encloses a volume of 1 litres or less.

According to embodiments, the carton package may be a gable-top package.

According to embodiments, the closure may be configured to break a tamper evidence of the carton package when opened for the first time, wherein an inner face of the cap is in fluid communication with the interior of the carton package already when the tamper evidence is unbroken. According to embodiments, the tamper evidence may be configured as a set of frangible bridges bridging a gap between the cap and the attachment ring.

According to a third aspect, parts or all of the above mentioned problems are solved, or at least mitigated, by a method of producing the closure as defined hereinabove, the method comprising injection moulding the closure in a multiple-cavity tool comprising a first moulding cavity for the spout and a second moulding cavity for the cap arrangement; and applying the cap arrangement to the spout. Thereby, the spout and the cap arrangement will be made of the same material, and exposed to the same moulding process parameter, such that they will crimp to the same extent during solidification. This facilitates obtaining an attractive and precise balance between rotatability and liquid tightness of the cap arrangement on the spout. Moreover, the orientation of the spout and cap arrangement are predetermined when removing them from the tool, which facilitates applying the cap arrangement on the spout before orientation is lost.

According to embodiments, the spout and the cap arrangement may be moulded in the same moulding shot.

According to a fourth aspect, parts or all of the above mentioned problems are solved, or at least mitigated, by a method of producing a carton package, the method comprising: providing a blank of packaging board having a first face which is to become an interior face of the carton package, and comprising a closure aperture; providing a closure comprising an attachment collar, a spout extending along a spout axis, and a cap arrangement comprising a flip cap, wherein the flip cap is tethered to the spout via a hinge and rotatable on the spout about the spout axis; inserting the spout and the cap arrangement, at an arbitrary rotation angle about the spout axis, through the closure aperture to bring an attachment face of the attachment collar in abutment with said first face; and attaching the attachment collar to said first face. The attachment collar may be attached to said first face by applying or generating heat at the interface between the attachment face of the attachment collar and said first face of the packaging board blank. The method may be used for attaching a closure as defined in any of the embodiments according to the first aspect hereinabove.

It is noted that embodiments of the invention may be embodied by all possible combinations of features recited in the claims. Further, it will be appreciated that the various embodiments described for the closure according to the first aspect are all combinable with carton package according to the second aspect, as well as with the methods as defined in accordance with the third and fourth aspects of the present invention, and vice versa.

### Brief description of the drawings

The above, as well as additional objects, features and advantages of the present invention, will be better understood through the following illustrative and nonlimiting detailed description of preferred embodiments of the present invention, with reference to the appended drawings, where the same reference numerals will be used for similar elements, wherein:
Fig. 1 is a perspective view of a carton package comprising a closure;
Fig. 2A is a perspective view of the closure of Fig. 1 prior to attachment to the carton package, the closure being in a fully closed position;
Fig. 2B is a perspective view of the closure of Fig. 2A in an open position;
Fig. 3 is a perspective view of a cap arrangement of the closure of Fig. 2A;
Fig. 4 is a perspective view of a spout and attachment collar of the closure of Fig. 2A;
Fig. 5 illustrates a section of the cap arrangement of Fig. 3;
Fig. 6 illustrates a section of the spout and attachment collar of Fig. 4;
Fig. 7 illustrates, in a section corresponding to the views of Figs 5 and 6, a process of assembling the cap arrangement of Fig. 3 and the spout and attachment collar of Fig. 4 to obtain the closure of Fig. 2A;
Fig. 8 illustrates, in a section corresponding to the view of Fig. 7, a process of attaching the closure of Fig. 2A to a carton package blank to arrive at the carton package of Fig. 1;
Fig. 9 is a flow diagram illustrating a method of producing the carton package of Fig. 1;
Fig. 10 is a flow diagram illustrating a method of producing the closure of Fig. 2A;
Fig. 11A illustrates a section of a moulding tool for moulding the cap arrangement of Fig. 3 and the spout and attachment collar of Fig. 4;
Fig. 11B illustrates, in a section view corresponding to that of Fig. 11A, a single-shot moulding of the cap arrangement of Fig. 3 and the spout and attachment collar of Fig. 4 using the tool of Fig. 11A; and
Fig. 11C illustrates, in a section view corresponding to that of Fig. 11A, the removal and assembly of the cap arrangement and the spout and attachment collar moulded in the tool of Fig. 11A.

All the figures are schematic, not necessarily to scale, and generally only show parts which are necessary in order to elucidate the embodiments, whereas other parts may be omitted.

### Detailed description of the exemplary embodiments

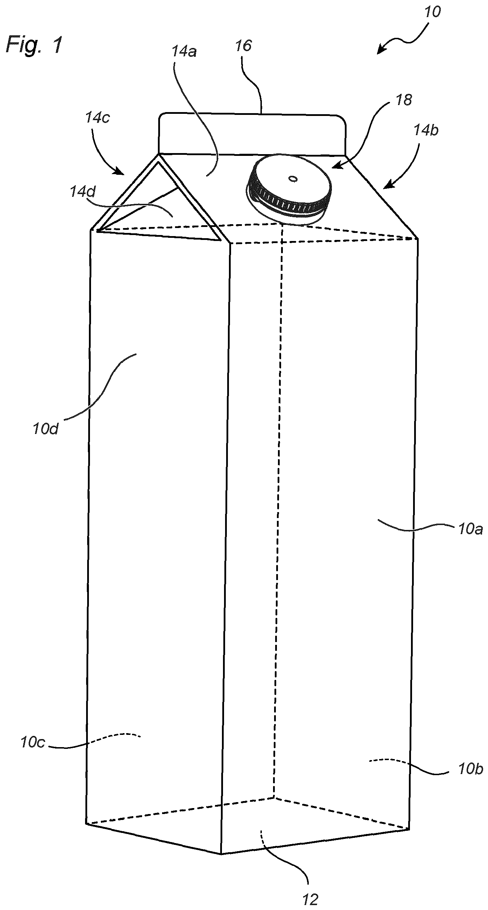

Fig. 1 illustrates a carton package 10 of gable-top type, wherein the carton package type is well known per se, for holding a pourable product such as a liquid foodstuff. The carton package 10 comprises four flat, rectangular side walls 10a, 10b, 10c and 10d defining a rectangular cuboid, a flat bottom wall 12, and two flat top walls 14a, 14c extending from a pair of opposite side walls 10a, 10c and meeting each other at a top ridge 16. The respective planes of the top walls 14a, 14c are typically inclined in relation to the bottom wall by an inclination angle in the interval 30-60°. Inclined gable walls 14b, 14d extend from respective side walls, below the top walls 14a, 14c, towards the top ridge.

The walls 10a-d, 12, 14a-d are folded from a laminated packaging board comprising a structural support laminate layer of e.g. paperboard, which provides the carton package with structural integrity, and one or several barrier layers which may provide liquid tightness and/or protect the pourable product against migration of e.g. flavour degrading substances through the packaging board. For example, the packaging board may comprise an innermost barrier laminate layer which makes the interior faces of the walls 10a-d, 12, 14a-d liquid-tight and protects the structural support laminate layer against being wetted by liquid content of the carton package 10. The barrier laminate layer may be made of a thermoplastic, such as polyethylene, which may also, depending on how the carton package has been folded and joined, serve as a heat-seal layer in joints where faces of the laminated packaging board meet. The packaging board may also comprise an outermost barrier laminate layer which may likewise be made of thermoplastic such as polyethylene. The outer barrier laminate layer may protect the structural support laminate layer from wetting from the outside, but may also, depending on how the carton package has been folded, serve as a heat-seal layer in joints. The laminated packaging board may also comprise one or several other barrier layers, such as an aluminium foil layer and/or an ethyl vinyl alcohol (EVOH) layer, to make the packaging board material gas-tight and suitable for aseptic packaging of long-storage products such as UHT milk.

One of the top walls 14a is provided with a closure 18, which is attached to an interior face of the respective top wall 14a in a manner which will be explained further below.

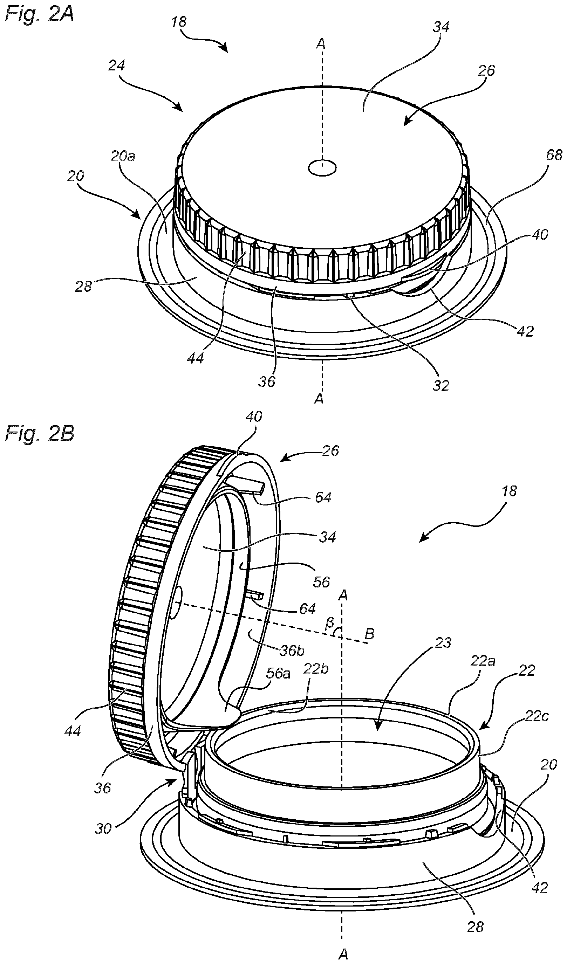

Figs 2A and 2B illustrates the closure 18 prior to being attached to the carton package 10 (Fig. 1), wherein Fig. 2A illustrates the closure 18 in a fully closed position, whereas Fig. 2B illustrates the closure 18 in an open position. The closure 18 comprises a circular attachment collar 20 having an attachment face 20a configured to be attached to an interior face of the carton package 10 (Fig. 1). The attachment collar 20 is integrally formed with a spout 22 (Fig. 2B) extending from the attachment collar along a spout axis A. The spout axis defines a cylindrical coordinate system, with an axial or longitudinal direction along the spout axis A, a radial direction along a polar axis perpendicularly away from the spout axis, and a circumferential direction perpendicular to the radial direction, along an angular axis of the cylindrical coordinate system. The spout 22 is substantially circular-cylindrical, with its axis of symmetry coinciding with the spout axis A, and has a circular pouring outlet 23 defined by a distal rim 22a of the spout 22, which distal rim 22a faces away from the attachment collar 20. The spout 22 is also concentric with the attachment collar 20. A cap arrangement 24 comprises a cap 26 of flip-cap type, and an attachment ring 28. The attachment ring 28 is permanently attached to the spout 22, and the cap 26 is permanently attached to the attachment ring 28 via a hinge 30. The hinge 30 is integrally formed with the cap 26 and the attachment ring 18, and is thereby of the type generally referred to as a living hinge.

The cap 26 is reclosable, i.e. it is repeatedly movable between the fully closed position of Fig. 2A, in which it closes the pouring outlet 23 (Fig. 2B), and the open position of Fig. 2B, in which pourable product may be poured from the pouring outlet 23, by pivoting the cap 26 about the hinge 30. Prior to opening for the first time, the cap 26 is attached to the attachment ring 28 via a plurality of frangible bridges 32 distributed along the cap's 26 interface towards the attachment ring 28. Cap 26, attachment ring 28, and frangible bridges 32 may be integrally formed, e.g. by moulding in a single piece. The frangible bridges 32 are broken the first time the cap 26 is opened, and serve as a tamper evidence. A suitable material for the cap arrangement 24, as well as the spout 22 and attachment collar 20, is low-density polyethylene.

The cap 26 comprises a flat, circular axial end wall 34, and an outer cap mantle 36 configured as a circular-cylindrical skirt extending from the axial end wall 34, radially outside the spout 22, in an axial direction towards the attachment collar 20, when the cap 26 is in the closed position of Fig. 2A. For the sake of simplicity, unless otherwise stated, any references to axial, radial or circumferential directions in relation to the cap 26 are with reference to the cylindrical coordinate axes defined by the spout axis A when the cap 26 is in the fully closed position of Fig. 2A.

In order to facilitate opening the cap 26, a radially outer face 38 of the cap mantle 36 is provided with a lift tab 40 extending radially away from the spout axis A. The lift tab 40 is positioned at the edge of the cap mantle 36 which faces the attachment collar 20, and circumferentially opposite to the hinge 30. The edge of the attachment ring 28 which faces away from the attachment collar 20 is provided with a cutaway 42 in register with the lift tab 40.

The cap arrangement 24 is rotatable about the spout axis both when in the fully closed position of Fig. 2A and when in the open position of Fig. 2B. Thereby, the user of the carton package 10 can rotate the cap arrangement 24 to any desired position about the spout axis A suitable for conveniently accessing the lift tab 40, to open the cap 26. The user can also rotate the cap arrangement 24 to any desired position about the spout axis A suitable for pouring once the cap 26 has been opened. When in the fully closed position, the cap arrangement 24 is configured to provide a rotation resistance torque, against rotation about the spout axis, of about 2 Nm. In order to facilitate turning the cap 26 about the spout axis A when in the closed position, the radially outer face 38 of the cap mantle 36 is provided with axially extending friction ribs 44, which are distributed about the circumference of the cap 26.

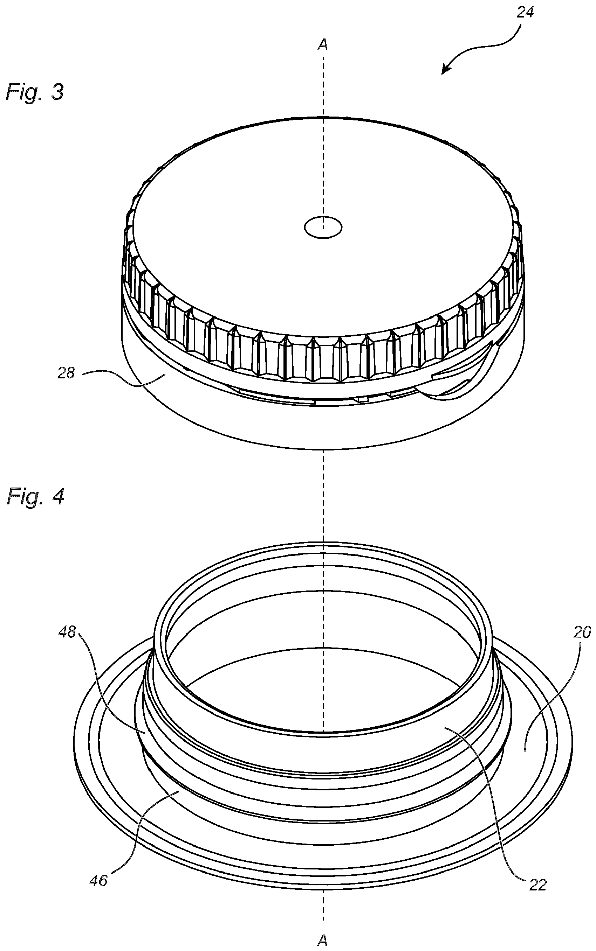

Prior to its application in a package 10 (Fig. 1), the closure 18 is assembled by pressing the cap arrangement 24 into engagement with the spout 22 along the spout axis A. Fig. 3 illustrates the cap arrangement 24 in isolation, and Fig. 4 illustrates in isolation the integrally formed member comprising the spout 22 and attachment collar 20, prior to assembly with the cap arrangement 24. The radially outer face of the spout 22 has a circumferential ring retainment groove 46 for holding the attachment ring 28 in an axially interlocking manner, while enabling rotation about the spout axis A. The ring retainment groove 46 is axially delimited by the attachment collar 20 and a ring retainment ridge 48 extending circumferentially about the radially outer face of the spout 22. The ring retainment ridge 48 may be continuous, as illustrated, or intermittent.

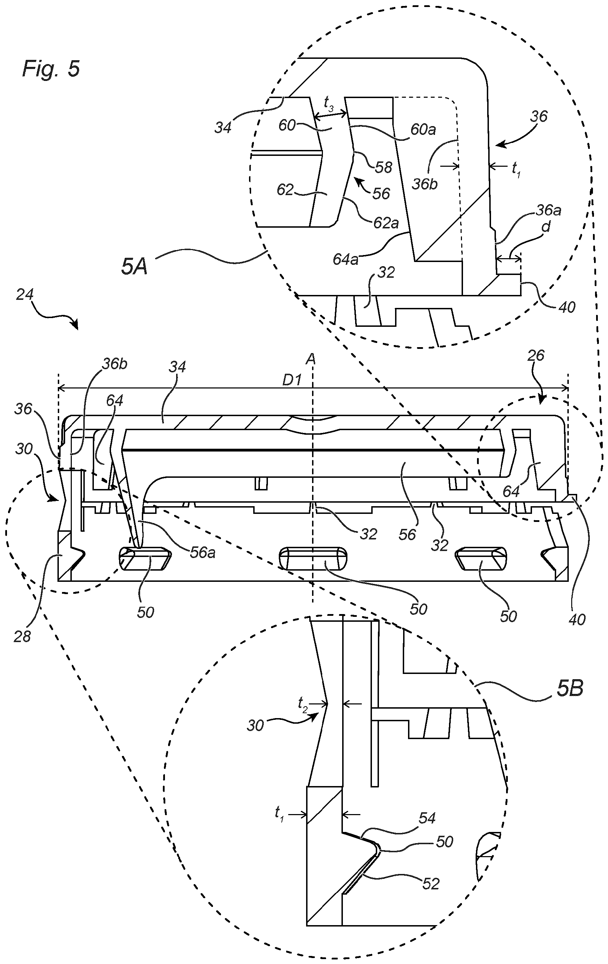

Fig. 5 illustrates the cap arrangement 24 in section, the section plane comprising the spout axis A and cutting through the circumferential centre of the lift tab 40 as well as the hinge 30. An upper magnified view 5A illustrates a portion of the cap 26, and a lower magnified view 5B illustrates the attachment ring 28 and the hinge 30. Each of the attachment ring 28 and the cap mantle 36 has a radial thickness t₁ of about 0,7 mm, whereas the hinge 30 is defined by a bending indication having about half that thickness, i.e. about 0,35 mm. The bending indication extends in the circumferential direction, and may typically have a width in the circumferential direction of between 5 mm and 15 mm, such as about 9 mm. A spout retainment ridge 50 extends circumferentially about the radially inner face of the attachment ring 28, and is configured to, when assembled with the spout 22 (Fig. 4), be positioned in the ring retainment groove 46 (Fig. 4). The spout retainment ridge 50 may be intermittent, as illustrated, or continuous. An assembly flank 52 of the spout retainment ridge 50 is moderately sloped in relation to the axial direction and thereby facilitates pressing, during assembly, the spout retainment ridge 50 along the spout axis A, over the ring retainment ridge 48 (Fig. 4) and into the ring retainment groove 46 (Fig. 4), whereas a retainment flank 54 of the spout retainment ridge 50 slopes more sharply in relation to the axial direction, and thereby prevents removal of the attachment ring 28 from the ring retainment groove 46.

As illustrated in the magnified view 5A, the lift tab 40 extends from a radially outer face 36a of the cap mantle 36 by a radial distance d of about 1 mm. The cap 26 has an outer diameter D1 of about 32 mm.

An inner face of the cap 26 comprises a bore seal 56, which is also illustrated in Fig. 2B. When the closure is in the closed position of Fig. 2A, the bore seal 56 extends axially into the spout 22 and sealingly engages with a radially inner face 22b of the spout 22. As illustrated in the cross-section of the magnified view 5A, the bore seal 56 comprises a radially outermost sealing ridge 58, which liquid-tightly seals against the radially inner face 22b (Fig. 2B) of the spout 22 (Fig. 2B). The bore seal 56 further comprises a bias section 60, which resiliently biases the sealing ridge against the radially inner face 22b of the spout 22. The bias section 60 is positioned between the bore seal's 56 attachment to the axial end wall 34 of the cap 26, and has a radially outer face 60a which tapers in a longitudinal direction along the spout axis A away from the attachment plane defined by the attachment face 20a of the attachment collar 20 (Fig. 2A). The bore seal 56 further comprises a guide section 62 configured to, when moving the cap 26 from the open position (Fig. 2B) to the fully closed position (Fig. 2A), guide the bore seal 56 into the spout 22 (Fig. 2B). For the purpose, a radially outer face 62a of the guide section 62 tapers in a longitudinal direction along the spout axis A towards the attachment plane defined by the attachment face 20a of the attachment collar 20 (Fig. 2A). The guide section 62 is defined by a section of the bore seal 56 which is axially closer than the sealing ridge 58 to the attachment plane of the attachment collar 20 (Fig. 2A). The bore seal 56 has a thickness ts of about 0,6 mm, which allows the bore seal 56 to flexibly adapt to the shape and position of the spout 22 when the cap 26 is closed. Adjacent to the hinge 30, the bore seal 56 is extended in the axial direction A towards the attachment plane defined by the attachment face 20a of the attachment collar 20 (Fig. 2A), to define a cap support tongue 56a configured to, when the cap 26 is open, engage with the distal rim 22a (Fig. 2B) of the spout 22 to support the cap 26 in the open position. Alternatively or additionally, the hinge 30 may be shaped to provide a bias towards an open position. In the illustrated embodiment, the hinge 30 is a so-called butterfly hinge configured to generate said bias. The cap support tongue and/or hinge bias, as the case may be, is/are configured to hold the cap at an opening angle β, which is illustrated in Fig. 2B, wherein the angle β is defined as the angle obtained between the spout axis A and a cap axis B which follows the cap 26, and which coincides with the spout axis A when the cap is in the fully closed position (Fig. 2A). It may be preferred that the opening angle β exceed 60°.

The section plane of Fig. 5 also extends through a pouring outlet alignment tab 64, a couple of which are also visible in the view of Fig. 2B. The pouring alignment tabs 64 protrude radially inwards from a radially inner face 36b of the cap mantle 36, and are distributed circumferentially about the spout axis A. The pouring outlet alignment tabs 64 have respective engagement faces 64a which are inclined in relation to the spout axis, which engagement faces are configured to engage with a radially outer face 22c (Fig. 2B) of the distal rim 22a defining the pouring outlet 23, to squeeze the radially inner face 22b (Fig. 2B) of the distal rim 22a defining the pouring outlet 23 against the bore seal 56.

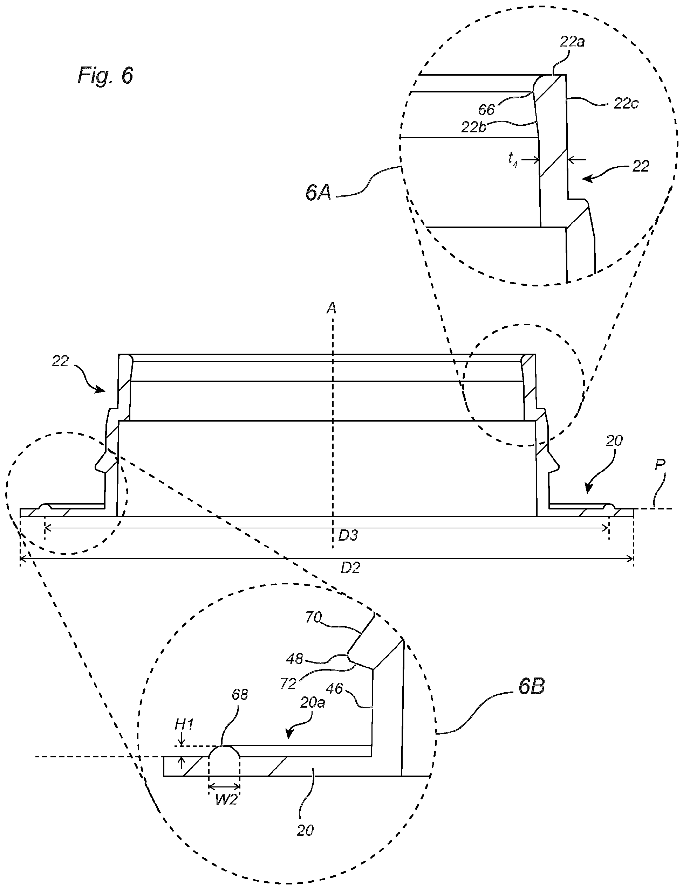

Fig. 6 illustrates the attachment collar 20 and spout 22 in section, wherein the section plane is the same as that of Fig. 5. An upper magnified view 6A illustrates a distal, with regard to the attachment collar 20, portion of the spout 22, and a lower magnified view 6B illustrates the attachment collar 20. The magnified view 6A illustrates, in particular, the spout's 22 distal rim 22a, which defines the pouring outlet 23. The circumferential wall of the spout 22 has a radial thickness t₄, adjacent to the pouring outlet, of about 0,7 mm. The radially inner face 22b of the spout 22 comprises a snap ridge 66 extending radially towards the spout axis A. The snap ridge 66 is configured to, when the cap 26 is moved from the open position (Fig. 2B) to the fully closed position (Fig. 2A), resiliently cam over the sealing ridge 58 of the bore seal 56 (Fig. 5), and snap into a rest position against the radially outer face 60a of the bias section 60, axially between the sealing ridge 58 and the axial end wall 34 (Fig. 5). In its rest position against the radially outer face of the bore seal 56 (Fig. 5), the snap ridge 66 may also operate as a seal. During the last part of the cap's 26 axial motion towards the fully closed position, the engagement between the radially outer face 22c of the spout 22 and the inclined faces 64a of the pouring outlet alignment tabs 64 gradually increases, to firmly press the radially inner face 22b of the distal rim 22a of the spout 22 against the sealing ridge 58 (Fig. 5) of the cap 26.

The attachment collar 20 is made of thermoplastic, and is adapted to be ultrasonically welded to the interior face of the carton package 10 (Fig. 1). The attachment collar 20 has an outer diameter D2 of about 40 mm. As best seen in the magnified view 6B, the attachment face 22a, which extends along an attachment plane P, comprises a thermoplastic liquefaction initiation ridge 68 protruding in the axial direction from the attachment face 20a to a height H1 of about 0,3 mm above the attachment face 20a. The liquefaction initiation ridge 68 is also made of thermoplastic, and serves for localizing the friction against the interior face of the carton package 10 (Fig. 1) during ultrasonic welding, to initiate local melting of the thermoplastic of the attachment collar 20. The liquefaction initiation ridge 68 is configured as a circular loop with a loop width or loop diameter D3 of about 37 mm, and is concentric with the spout axis A. The ridge 68 as such preferably has a ridge width W2 of between 0,2 mm and 1,0 mm, for example about 0,6 mm. The magnified view 6B also illustrates the ring retainment ridge 48 in section. An assembly flank 70 of the ring retainment ridge 48 is moderately sloped in relation to the axial direction A and thereby facilitates pressing, during assembly, the spout retainment ridge 50 (Fig. 5) along the spout axis A, over the ring retainment ridge 48 and into the ring retainment groove 46, whereas a retainment flank 72 of the ring retainment ridge 48 slopes more sharply in relation to the axial direction A, and thereby prevents removal of the attachment ring 28 once it has reached its final position in the ring retainment groove 46.

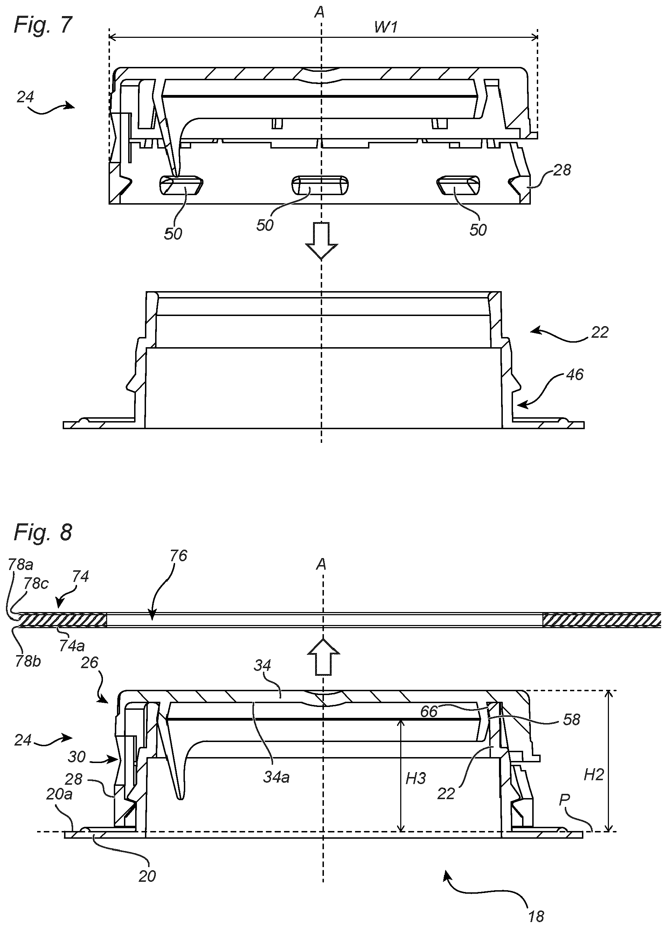

Fig. 7 illustrates a process of attaching the cap arrangement 24 to the spout 22. The cap arrangement 24 and the spout 22 are pressed together along the direction of the spout axis A until the spout retainment ring 50 of the attachment ring 28 snaps into engagement with the ring retainment groove 46 of the spout 22. The closure 18 thus obtained is illustrated in Fig. 8.

Fig. 8 illustrates a section of the entire closure 18 in the closed position, prior to opening for the first time. The total width W1 of the cap arrangement 24 in a direction perpendicular to the spout axis about 33 mm, i.e. it is smaller than the corresponding width D3 of the liquefaction initiation ridge 68 (Fig. 6). The total height H2 of the closure 18 above the attachment plane P, i.e. excluding the attachment collar 20, is about 11 mm, and the portion of the closure 18 protruding from the carton package 10 (Fig. 1), when attached, thereby has a height/width ratio of about 0,33. The cap 26 is rotatable about the spout axis A, with maintained liquid tightness, at a fixed axial position determined by the engagement of the respective mating ridges 58, 66 on the cap 26 and the spout 22, and the attachment ring 28 is rotatable in the retainment groove 46 (Fig. 7). The cap 26 seals against the spout 22 primarily along a sealing line defined by the sealing ridge 58, which extends in a closed, circular line around the spout axis A. The sealing line defined by the sealing ridge 58 is positioned at an axial distance H3 of about 8 mm from the attachment collar 20. The liquid-tight seal defined by the engagement between the bore seal 56 and the inner face 22b of the spout 22 is the sole liquid-tight seal of the closure 18, such that the interior face 34a of the axial end wall 34 of the cap 26 is in fluid communication with the interior of the carton package (Fig. 1) already before the tamper evidence is broken. According to an alternative configuration, however, the closure 18 may be provided with an auxiliary liquid-tight seal (not illustrated), such as an impervious membrane closing the spout, and a tear ring for tearing the membrane.

Fig. 8 also illustrates a process of attaching the closure 18 to a blank of packaging board 74. The blank of packaging board 74 may be a flat blank yet to be folded into a carton package 10, or an already folded carton package blank which has not yet been provided with a closure. In either case, the blank of packaging board has a first face 74a which is to become an interior face of the carton package 10 (Fig. 1), and comprises a closure aperture 76 configured to receive the closure 18. The packaging board may comprise a structural support layer 78a, an inner thermoplastic barrier layer 78b, and an outer thermoplastic barrier layer 78c. The spout 22 and the cap arrangement 24 are inserted through the closure aperture 76 to bring the attachment face 20a of the attachment collar 20 in abutment with said first face 74a. Heat is applied to the interface between the attachment face 20a of the attachment collar 20 and said first face 74a of the packaging board blank 74, for example by moving the attachment collar 20 in relation to the packaging board blank 74 to generate friction heat at the interface between them, to fuse the attachment face 20 with the thermoplastic barrier layer 78b.

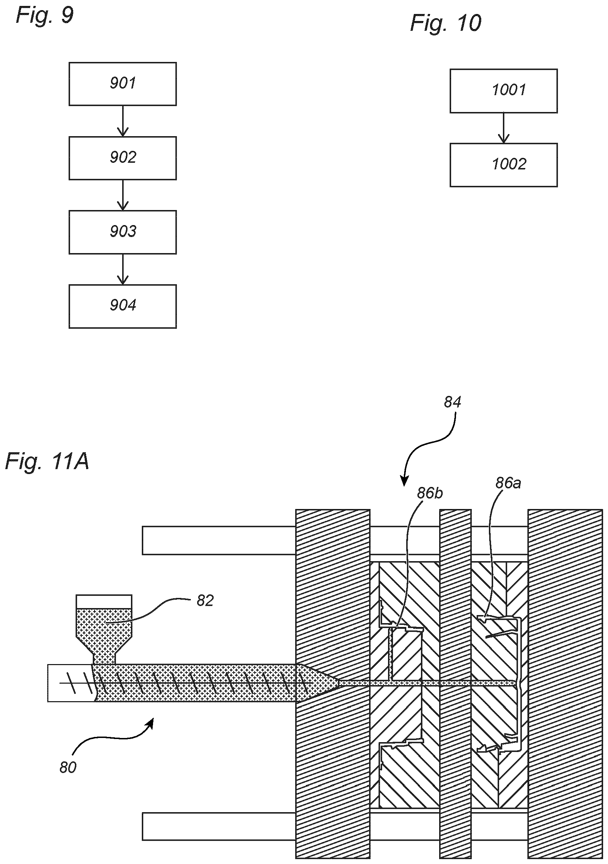

The closure described in detail hereinabove is well suited for use in a carton package production line adapted for screw caps. In particular, no specific orientation of the closures 18 about their respective spout axes A is required when the closures 18 are attached to the respective packaging board blanks 74, because the caps 26 can be rotated to a convenient position by the user of the carton package prior to opening. A method of producing a carton package, such as the carton package 10 of Fig. 1, is illustrated in the flow chart of Fig. 9 with reference to the elements illustrated in Fig. 8.

In step 901, a blank of packaging board 74 is provided. The packaging board blank 74 has a first face 74a which is to become the interior face of the carton package 10 (Fig. 1), and comprises a closure aperture 76.

In step 902, a closure 18 is provided, the closure 18 comprising an attachment collar 20, a spout 22 extending along a spout axis A, and a cap arrangement 24 comprising a flip cap 26, wherein the flip cap 26 is tethered to the spout 22 via a hinge 30 and rotatable on the spout 22 about the spout axis A.

In step 903, the spout 33 and the cap arrangement 24 are inserted at an arbitrary rotation angle about the spout axis A through the closure aperture 76 to bring an attachment face 20a of the attachment collar 20 in abutment with said first face 74a. The arbitrary rotation angle may be different for different consecutive carton packages produced, and in particular, may be substantially random, due to e.g. feeding closures 18 in bulk to a carton package producing machine.

In step 904, heat is applied to attach the attachment collar 20 to said first face 74a.

The packaging board 74 may be folded to e.g. a gable-top package 10 (Fig. 1) prior to, during, or after attaching the closure to the packaging board 74. Different folding processes for folding and sealing of packaging board to form a carton package are well known per se to those skilled in the art, and are not described in detail herein.

Fig. 10 illustrates a method of producing the closure 18 described above.

In step 1001, the cap arrangement 24 and the spout 22 and attachment collar 20 are injection moulded in a single shot in a multiple-cavity tool comprising a first moulding cavity for the spout 22 and attachment collar 20, and a second moulding cavity for the cap arrangement 24.

In step 1002, the cap arrangement 24 is applied to the spout 22.

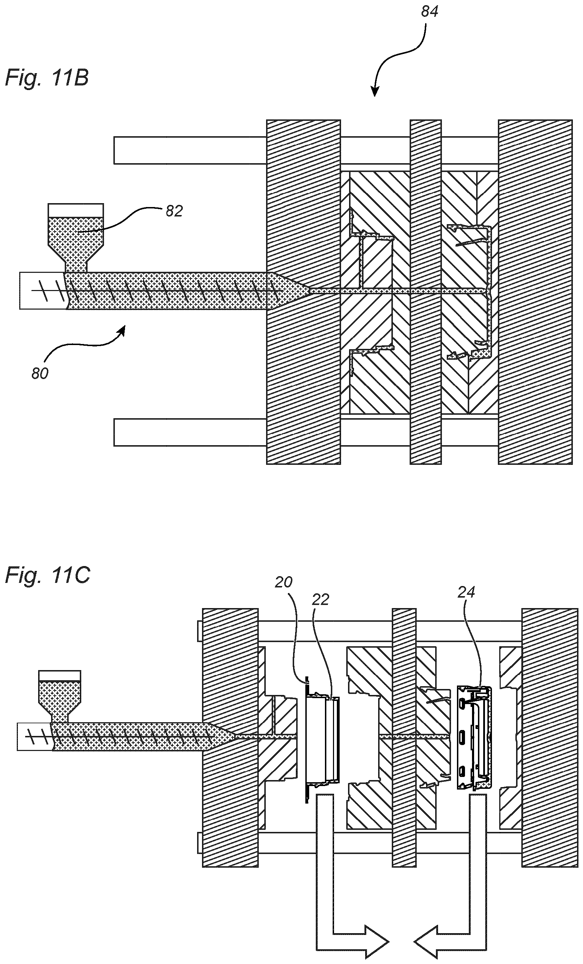

Figs 11A, 11B and 11C illustrate the method of Fig. 10 in somewhat greater detail. With reference to Fig. 11A, a resin injector 80 is configured to inject polyethylene resin 82 into a multiple-cavity tool 84, and more precisely a stack-mould tool, which tool defines a first moulding cavity 86a for the spout 22 and attachment collar 20 (Fig. 4), and a second moulding cavity for the cap arrangement 24 (Fig. 3). It is pointed out that the illustration is highly schematic, and does not provide any details on e.g. extraction directions, heating, cooling, detailed positions of parting lines, ejector pins, or the use of retractable cores.

Fig. 11B illustrates the injection of polyethylene resin 82 simultaneously into the first and second mould cavities 86a, 86b (Fig. 11A) to mould the spout 22 and attachment collar 20, as well as the cap arrangement 24, in a single shot. After solidification, the dies of the tool 84 are separated and the cap arrangement 24 and the spout 22 and attachment collar 20 are removed. with maintained control of their mutual geometric relationship, and pressed together as illustrated by the arrows of Fig. 11C, and as illustrated in greater detail in Fig. 7, prior to losing their mutual geometric relationship. Even though not illustrated, it will be appreciated that each of the tool cavities 86a, 86b (Fig. 11A) may be shaped to enable moulding multiple instances of the respective elements in parallel.

The invention has mainly been described above with reference to a few embodiments. However, as is readily appreciated by a person skilled in the art, other embodiments than the ones disclosed above are equally possible within the scope of the invention, as defined by the appended patent claims. For example, even though the closure 18 has been described in detail with reference to a gable-top package 10, it may alternatively be applied to any other suitable type of carton package, for example to the top face of a cuboid-shaped package. The spout axis A has been illustrated as being perpendicular to the attachment plane P defined by the attachment collar 20. This is not necessary. Moreover, the attachment collar 20 need not extend along a single plane P only; it could, alternatively, e.g. be shaped to follow a non-planar inner shape of the carton package. The attachment collar need not be circular. In the claims, the word "comprising" does not exclude other elements or steps, and the indefinite article "a" or "an" does not exclude a plurality.

## Claims

1. A closure (18) configured to be attached to a carton package (10) for a pourable product, the closure (18) comprising
an attachment collar (20) extending along an attachment plane (P) and having an attachment face (20a) configured to be attached to an interior face (74a) of the carton package (10);
a spout (22) extending from the attachment collar (20) along a spout axis (A), the spout (22) having a circular cross-section in a plane (P) perpendicular to the spout axis (A); and
a cap arrangement (24) comprising
a reclosable cap (26) movable between a fully closed position, in which it closes a circular pouring outlet (23) of the spout (22), and an open position, in which pourable product may be poured from the pouring outlet (23);
an attachment ring (28) permanently and rotatably attached to the spout (22); and
a hinge (30) permanently holding the cap (26) to the attachment ring (28), wherein the cap (26) is a flip cap configured to be moved from the fully closed position to the open position by pivoting the cap (26) about the hinge (30).

2. The closure (18) according to claim 1, wherein the attachment collar (20) is made of thermoplastic, and the attachment face (20a) of the attachment collar (20) is provided with a liquefaction initiation ridge (68) extending about the spout axis (A).

3. The closure (18) according to claim 2, wherein a total width (W1) of the cap arrangement (24) in a direction perpendicular to the spout axis (A) is smaller than a loop width (D3) of the liquefaction initiation ridge (68) in a direction perpendicular to the spout axis (A).

4. The closure (18) according to any of the preceding claims, wherein the cap arrangement (24) is rotatable about the spout axis (A) with the cap (26) in the fully closed position.

5. The closure (18) according to any of the preceding claims, wherein the cap (26) is rotatable about the spout axis (A), when in the fully closed position, at a fixed axial position along the spout axis (A).

6. The closure (18) according to any of the preceding claims, wherein the cap (26) comprises an outer cap mantle (36) at least partially circumferentially surrounding the outer perimeter (22c) of the pouring outlet (23) of the spout (22).

7. The closure (18) according to claim 6, wherein the cap mantle has a radially outer face (36a) provided with friction ribs (44) for turning the cap (26) about the spout axis (A).

8. The closure (18) according to any of the claims 6-7, wherein the cap mantle (36) is substantially circular-cylindrical.

9. The closure (18) according to any of the claims 6-8, wherein an outer face (36a) of the cap mantle (44) is provided with a lift tab (40) extending radially away from the spout axis (A).

10. The closure (18) according to claim 9, wherein the lift tab (40) extends radially less than 2 mm from a radially outer face (36a) of the cap mantle (36).

11. The closure (18) according to any of the preceding claims, wherein the cap (26) seals, when in the fully closed position, against the spout (22) along a sealing line (58) extending in a closed line about the spout axis (A), wherein the sealing line (58) is positioned at an axial distance (H3) from the attachment collar (20) of at least 5 mm, wherein the closure (18) is free from any other liquid-tight seals between the interior and the exterior of the package (10).

12. The closure (18) according to any of the preceding claims, wherein the cap (26) is rotatable about the spout axis (A) while remaining in the liquid-tight position, and/or without breaking any auxiliary liquid-tight barrier(s) and/or frangible bridge(s) associated with the closure (18).

13. A method of producing the closure (18) according to any of the preceding claims, comprising
injection moulding the closure (18) in a multiple-cavity tool (84) comprising a first moulding cavity (86a) for the spout (22) and a second moulding cavity (86b) for the cap arrangement (24); and
applying the cap arrangement (24) to the spout (22) wherein the spout (22) and the cap arrangement (24) are moulded in the same moulding shot.

14. A method of producing a carton package (10), the method comprising:
providing a blank of packaging board (74) having a first face (74a) which is to become an interior face of the carton package (10), and comprising a closure aperture (76);
providing a closure (18) comprising an attachment collar (20), a spout (22) extending along a spout axis (A), and a cap arrangement (24) comprising a flip cap (26), wherein the flip cap (26) is tethered to the spout (22) via a hinge (30) and rotatable on the spout (22) about the spout axis (A);
inserting the spout (22) and the cap arrangement (24), at an arbitrary rotation angle about the spout axis (A), through the closure aperture (76) to bring an attachment face (20a) of the attachment collar (20) in abutment with said first face (74a); and
attaching the attachment collar (20) to said first face (74a).

15. A method of providing a carton package (10) with a closure (18), the method comprising:
providing a cap arrangement (24) comprising a flip up cap (26), an attachment ring (28) and a hinge (30) holding the flip-up cap (26) to the attachment ring;
providing an attachment collar (20) comprising an attachment face (20a) configured to be attached to an interior face of the carton package and a spout extending from the attachment collar (20) along a spout axis (A), wherein the flip up cap (23) is tethered to the spout (22) via the hinge (30) and rotatable on the spout (22) about the spout axis (A);
wherein the attachment face (20a) of the attachment collar (20) comprises a thermoplastic liquefaction initiation ridge (68) extending about the spout axis (A); and
attaching the closure (18) to an interior face of the carton package (10) by welding from the inside of the carton package (10).
